# EUROPEAN PATENT SPECIFICATION

(11) **EP 1 788 750 B1**
(45) Date of publication and mention of the grant of the patent: **06.06.2012**
(21) Application number: 06123725.1
(22) Date of filing: 09.11.2006
(51) Int. Cl.: H04W 48/14

(54) **A method of determining available configuration information at a wireless hotspot**
Verfahren zur Feststellung verfügbarer Konfigurationsdaten in einem drahtlosen Hotspot
Procédé pour la détermination d'information de configuration disponible dans des points chauds

(30) Priority: 14.11.2005 GB 0523145
(43) Date of publication of application: 23.05.2007
(73) Proprietor: SIEMENS AKTIENGESELLSCHAFT, 80333 München (DE)
(72) Inventor: MCDonald, Andrew, Romsey, Hampshire SO51 7UN (GB); Hancock, Robert, Southampton, Hampshire SO18 1NW (GB)
(74) Representative: Payne, Janice Julia

(56) References cited:
- WO-A-01/63843
- WO-A-2004/032415
- US-B1- 6 353 891

## Description

This invention relates to a method of determining available configuration information at a wireless hotspot.

One example of a wireless network is one operating under the IEEE 802.11 wireless local area network (WLAN) standard. Typically, when a terminal initially enters an unknown hotspot, it wants to know what authentication realms (e.g. moo.com, glass.com) are supported by an access point (AP) of the hotspot on an access network, and whether an association can be made between the terminal and a home network through the access network. If an association is possible, then this allows a controlled session to be established, once the IEEE 802.11 authentication procedure has completed.

Current methods work, essentially, on a trial and error basis. The terminal attempts to associate, within the hotspot, using its own realm, and then hopes that the access network can satisfactorily manage this value to achieve successful authentication. If this procedure is unsuccessful the terminal is left unable to proceed further and it is likely that the user will leave the hotspot disheartened with the service and in many cases not understanding the reason for failure.

WO 01/63843 describes a method for accessing a network in a telecommunications system, where settings needed to access networks are stored in the terminal, which scans for available networks and compares information from these with the stored information sets.

In accordance with the present invention, a method of determining available configuration information at a wireless hotspot comprises sending from a terminal to an access point of the hotspot, a message requesting configuration information from the access point; sending from the access point a response to the terminal; and comparing the response from the access point with stored data from the terminal to determine whether a suitable configuration is available; wherein the response comprises a list of hashes of realms.

The present invention allows the terminal to obtain configuration information and to make a decision about whether or not to use a particular access point based on the comparison with its stored data, so that it does not start off an association procedure which has no chance of success.

Preferably, the comparison of the response and the stored data takes place within the terminal.

Preferably, the configuration information comprises one of standardisation information; service provider network characteristics; or authentication realm information.

Preferably, the message includes the terminal's preferred authentication realm.

Preferably, the message is a probe request.

Preferably, the length of the hash is variable.

Preferably, the response comprises acceptance or rejection of the preferred authentication realm.

This can be sent in addition to the hashes, or alone.

Preferably, the response further includes an indication of hash length.

Preferably, the response is sent using a beacon or probe response.

Preferably, the stored data comprises a list of hashes.

An example of a method of determining available configuration information at a wireless hotspot will now be described with reference to the accompanying drawings in which:
Figure 1 illustrates an arrangement in which the method of the present invention is applied;
Figure 2 illustrates the comparison of hashes in the system of Fig. 1 in more detail.
Figure 3 is one example of a typical hash response; and,
Figure 4 is another example of a typical hash response for use in the present invention.

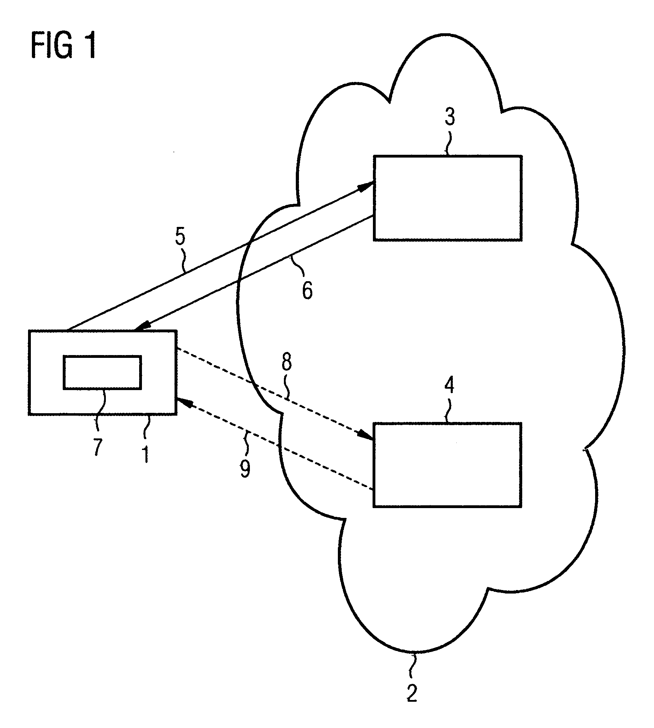

Fig. 1 shows a terminal 1 which has moved to be within range of a hotspot 2, which has one or more available access points (AP) 3, 4 through which the terminal can connect. The APs of the hotspot may have different configurations, so that if one AP is not suitable for a particular terminal another AP can be tried. In order to determine which AP the terminal should associate with, before actually initiating the procedure, the terminal 1 sends a message 5 to a first AP 3 requesting configuration information. The AP sends back a reply 6 which either provides an indication of the configuration of that AP, or if the terminal has included in the message 5 a specific preference for a particular configuration, then the response 6 may include acknowledgement or rejection of the availability of that configuration feature. If the configuration information includes a number of options, the terminal then compares these with data in a store 7 in the terminal 1 to determine whether any of them are suitable for the terminal's requirements. If the comparison does not produce any successful matches, then the terminal can try a different AP 4, sending a message 8, receiving a response 9 and making the comparison in the same way.

With the proliferation of realm names (and indeed slight variants of common names, e.g. T-Mobile1.com, T-Mobile-lite.com), the terminal can be informed about supported realms within the hotspot, from which it can then make an informed choice as to whether association will be successful or not. Further more, the terminal may be enabled to choose between different supported realms, based on other criteria such as quality of service (QoS), maximum bandwidth, latency and cost.

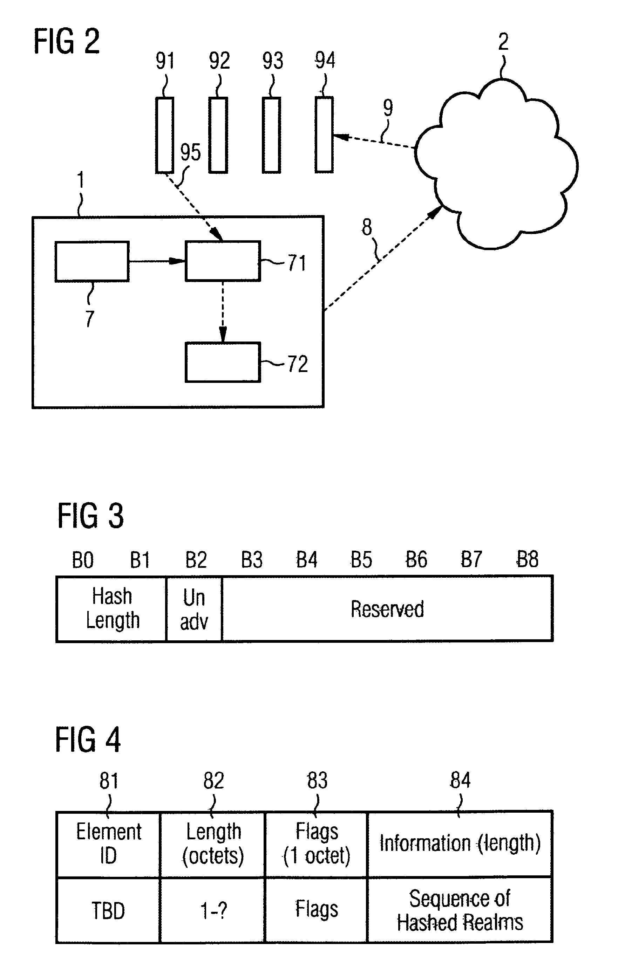

For the example of the realms supported by the AP, rather than sending a list of the realms in the response, the AP 3 may send a list of hashes of the realms. The AP typically uses a beacon or management, or data frames, such as a Probe Response or action frame, to send such a list, although other types of response could be used. An example of hashing is that rather than sending the realm string "example.com" the AP sends a two byte hash (e.g. 0xf167). The terminal 1 has stored data, so in this example, the terminal compares hashes of realms for which it has credentials, taken from the store 7, against the hashes provided by the AP 3 to determine which ones can be supported by the network. Hence the comparison of the hashes occurs within the terminal 1 as shown in more detail in Figure 2.

In Fig. 2, the terminal 1 sends a Probe Request 8 to the hotspot 2, which then replies with a series of Beacons, or Probe Responses 91, 92, 93 and 94 at regular time intervals, each containing the list of hashed realms. Each realm list is processed in turn from received messages 95 at the terminal 1 and compared by a difference algorithm 71 with the current stored hashes in the terminal store 7. Any matches in the realms are then processed and re-stored by a matching algorithm 72

The terminal may choose to include data in its message to the AP, which in this example is sent as a Probe Reque st, action frames, or data frames, the data being a realm that the terminal would like to use to authenticate with, so that the terminal can determine whether the realm is supported by the AP for authentication. The response from the AP may be a simple 'yes' or 'no', and in the 'no' case the AP may also supply a list of hashes of at least some of the realms that are supported. Optionally, the AP may also include an indicator saying "and others" if there is insufficient room in the message for the entire list. These hashes can again be checked by the terminal against the credentials, or configuration information that the terminal possesses. Hence, in this example, there is a comparison of the hashes in the stored data included with the message, with hashes in the AP, which occurs within the AP and if the response includes a list of hashes of realms which are available, then there is also a comparison of hashes within the terminal.

Figs. 3 and 4 show typical embodiments of the hash list response which is suggested for IEEE 802.11. In Fig. 3, bits B0 and B1 are used for the hash length, B2 is an unadvertised flag and B3 to B8 are reserved. In cases where a complete set of hashed realms cannot be included in the message, an "other unadvertised subscription service provider network (SSPN) available indicator is included, i.e. a flag that, when set, indicates that there are more realms than those in the current sequence of hashed realms, that is, there may be more realms known to the network, which are not in the list. In Fig. 4, the response is divided into an Element ID 81, the precise nature of which is not yet determined; a number of octets 82, typically 4 or 5 for length; 1 octet 83 for flags; and information 84 of a number of octets in length for the sequence of hash realms.

Basically this allows the system to return a short response, indicating to a terminal that if it queries again, it may get more information. It would also allow the system to cycle through several smaller realm lists over a period of time.

There are trade-offs between having longer hashes, to avoid hash collisions, and shorter hashes, so that more can be fitted into the message. As an improvement to the use of a fixed hash length, an adaptive hash algorithm can be used. In this case, the AP can make a choice between a number of different hash lengths. The AP then includes information, which is sent to the terminal, to indicate which hash length has been used together with the set of hashes.

In the unicast Probe Request/Response example described above, the decision of which hash length to use might simply be based on the number of realms that the AP wishes to indicate support for. (The AP may filter the number of supported realms, based on other information contained within the STA Probe Request).

In the case of the broadcast Beacon message, there may be additional inputs. In particular, the choice of hash length may depend on how busy the network is. When the network is busy, shorter lengths can be used to reduce the amount of time taken up by the broadcast Beacon messages.

The hashes of different lengths may be computed using the same algorithm, but with the output truncated to different lengths.

The configuration information for which the terminal seeks clarification of availability can include network characteristics e.g. IEEE 802.21 information, service provider network characteristics, and the realm information used for authentication, amongst others, e.g. IMS, 3GPP2 information service and universal plug and play (UPnP).

The present invention provides a considerable advantage to the standardisation of IEEE 802.11 equipment. The provision of short lengths of broadcast information is a significant advance, since information needs to be kept to a minimum, so that the initial beacon mechanism of the standard can still operate with legacy equipment. This invention meets this requirement.

In a similar manner, this invention can also be applied to IEEE 802.16 and IEEE 802.22 systems. Initially considering IEEE 802.16 wireless metropolitan area networks (WiMAX), a Ranging Request 8 or another IEEE 802.16 MAC management frame) from the terminal 1 to a base station (BS) 4 is used to transmit the realm information. The Ranging Request (RNG-REQ) is the equivalent IEEE 802.16 terminology for the IEEE 802.11 probe request. Correspondingly the BS 4 then replies with a Ranging Response (RNG-RSP) 9, or another suitable IEEE 802.16 MAC management frame, which is the equivalent of the IEEE 802.11 probe response. The BS then typically uses a MAC management, or data, frame to transmit the list of hashes.

Within IEEE 802.22 (Wireless Regional Area Networks), this system also uses a Ranging Request 8, or another IEEE 802.22 management frame, from the terminal 1 to the BS 4 to transmit the realm information. The RNG-REQ is the equivalent IEEE 802.22 terminology for the IEEE 802.11 probe request. Correspondingly, the BS 4 then replies with a RNG-RSP 9, or another suitable IEEE 802.16 MAC management frame, which is the equivalent of the IEEE 802.11 probe response. The BS then typically uses management, or data, frame to transmit the list of hashes.

Architecturally IEEE 802.11, IEEE 802.16 and IEEE 802.22 can be considered to be similar systems, the main variation being the area covered by each hotspot, metres for IEEE 802.11 to kilometres for IEEE 802.22. Fundamentally this invention can be applied to all three technologies.

## Claims

1. A method of determining available configuration information at a wireless hotspot (2), the method comprising sending from a terminal (1) to an access point (3, 4) of the hotspot, a message (5) requesting configuration information from the access point; sending from the access point a response (6) to the terminal; and comparing (71) the response from the access point with stored data (7) from the terminal to determine whether a suitable configuration is available; **characterised in that** the response (6) comprises a list of hashes of realms.

2. A method according to claim 1, wherein the comparison (71) of the response (6) and the stored data (7) takes place within the terminal (1).

3. A method according to claim 1 or claim 2, wherein the configuration information comprises one of standardisation information; service provider network characteristics; or authentication realm information.

4. A method according to any preceding claim, wherein the message (5) includes the terminal's (1) preferred authentication realm.

5. A method according to any preceding claim, wherein the message (5) is a probe request.

6. A method according to any preceding claim, wherein the length of the hash is variable.

7. A method according to claim 4 or claim 5 or 6 when dependent from claim 4, wherein the response (6) comprises acceptance or rejection of the preferred authentication realm.

8. A method according to any preceding claim, wherein the response (6) further includes an indication of hash length.

9. A method according to any preceding claim, wherein the response (6) is sent using a beacon or probe response.

10. A method according to any preceding claim, wherein the stored data (7) comprises a list of hashes.

## Patentansprüche

1. Verfahren zum Feststellen verfügbarer Konfigurationsdaten in einem drahtlosen Hotspot (2), das Folgendes umfasst: Senden einer Nachricht (5) von einem Endgerät (1) zu einem Zugangspunkt (3, 4) des Hotspots, die Konfigurationsdaten von dem Zugangspunkt anfordert, Senden einer Antwort (6) von dem Zugangspunkt zum Endgerät und Vergleichen (71) der Antwort vom Zugangspunkt mit gespeicherten Daten (7) vom Endgerät, um festzustellen, ob eine geeignete Konfiguration verfügbar ist, **dadurch gekennzeichnet, dass** die Antwort (6) eine Liste mit Hash-Werten von Realms umfasst.

2. Verfahren nach Anspruch 1, bei dem der Vergleich (71) der Antwort (6) mit den gespeicherten Daten (7) innerhalb des Endgerätes (1) erfolgt.

3. Verfahren nach Anspruch 1 oder 2, bei dem die Konfigurationsdaten Standardisierungsdaten, Diensteanbieternetzmerkmale oder Authentifizierungs-Realm-Daten umfassen.

4. Verfahren nach einem der vorhergehenden Ansprüche, bei dem die Nachricht (5) den bevorzugten Authentifizierungs-Realm des Endgerätes (1) enthält.

5. Verfahren nach einem der vorhergehenden Ansprüche, bei dem es sich bei der Nachricht (5) um einen Probe-Request handelt.

6. Verfahren nach einem der vorhergehenden Ansprüche, bei dem die Hash-Länge variabel ist.

7. Verfahren nach Anspruch 4 oder Anspruch 5 oder 6 bei Abhängigkeit von Anspruch 4, bei dem die Antwort (6) die Annahme oder Ablehnung des bevorzugten Authentifizierungs-Realms umfasst.

8. Verfahren nach einem der vorhergehenden Ansprüche, bei dem die Antwort (6) ferner eine Angabe zur Hash-Länge umfasst.

9. Verfahren nach einem der vorhergehenden Ansprüche, bei dem die Antwort (6) mit Hilfe eines Beacon oder einer Probe-Response gesendet wird.

10. Verfahren nach einem der vorhergehenden Ansprüche, bei dem die gespeicherten Daten (7) eine Liste mit Hash-Werten umfassen.

## Revendications

1. Procédé pour déterminer des informations de configuration disponibles sur une borne sans fil (2), le procédé consistant à envoyer d'un terminal (1) à un point d'accès (3, 4) de la borne, un message (5) demandant des informations de configuration au point d'accès, à envoyer du point d'accès une réponse (6) au terminal, et à comparer (71) la réponse du point d'accès avec des données stockées (7) dans le terminal pour déterminer si une configuration adaptée est disponible, **caractérisé en ce que** la réponse (6) comprend une liste d'informations parasites de domaines.

2. Procédé selon la revendication 1, dans lequel la comparaison (71) de la réponse (6) et des données stockées (7) a lieu dans le terminal (1).

3. Procédé selon la revendication 1 ou la revendication 2, dans lequel les informations de configuration se composent soit d'informations de standardisation, soit de caractéristiques du réseau du fournisseur de services, soit d'informations sur le domaine d'authentification.

4. Procédé selon l'une quelconque des revendications précédentes, dans lequel le message (5) inclut le domaine d'authentification préféré du terminal (1).

5. Procédé selon l'une quelconque des revendications précédentes, dans lequel le message (5) est une demande d'essai.

6. Procédé selon l'une quelconque des revendications précédentes, dans lequel la longueur des informations parasites est variable.

7. Procédé selon la revendication 4 ou la revendication 5 ou 6 quand il dépend de la revendication 4, dans lequel la réponse (6) comprend une acceptation ou un rejet du domaine d'authentification préféré.

8. Procédé selon l'une quelconque des revendications précédentes, dans lequel la réponse (6) comprend par ailleurs une indication de la longueur des informations parasites.

9. Procédé selon l'une quelconque des revendications précédentes, dans lequel la réponse (6) est envoyée au moyen d'une balise ou d'une réponse d'essai.

10. Procédé selon l'une quelconque des revendications précédentes, dans lequel les données stockées (7) comprennent une liste d'informations parasites.
